(19) Europäisches Patentamt European Patent Office Office européen des brevets

(11) **EP 4 459 124 B1**

(12) **EUROPEAN PATENT SPECIFICATION**

(45) Date of publication and mention of the grant of the patent:
**28.01.2026 Bulletin 2026/05**

(21) Application number: **23171648.1**

(22) Date of filing: **04.05.2023**

(51) International Patent Classification (IPC):
*F03D 7/02* (2006.01)    *F03D 7/04* (2006.01)
*F03D 17/00* (2016.01)

(52) Cooperative Patent Classification (CPC):
**F03D 7/0256; F03D 7/0224; F03D 7/046;**
F05B 2270/328; Y02E 10/72

(54) **WIND TURBINE, METHODS FOR OPTIMIZING THE OPERATION OF A WIND TURBINE, CONTROLLER FOR CONTROLLING OPERATION OF A WIND TURBINE AND COMPUTER PROGRAM**

WINDTURBINE, VERFAHREN ZUR OPTIMIERUNG DES BETRIEBS EINER WINDTURBINE, STEUERGERÄT ZUR STEUERUNG DES BETRIEBS EINER WINDTURBINE UND COMPUTERPROGRAMM

ÉOLIENNE, PROCÉDÉS D'OPTIMISATION DU FONCTIONNEMENT D'UNE ÉOLIENNE, DISPOSITIF DE COMMANDE POUR COMMANDER LE FONCTIONNEMENT D'UNE ÉOLIENNE ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**06.11.2024 Bulletin 2024/45**

(73) Proprietor: **Wobben Properties GmbH 26607 Aurich (DE)**

(72) Inventor: **Zijlstra, Martijn 6861 ZB Oosterbeek (NL)**

(74) Representative: **Eisenführ Speiser Patentanwälte Rechtsanwälte PartGmbB Postfach 31 02 60 80102 München (DE)**

(56) References cited:
**EP-A2- 2 486 270      EP-A2- 2 644 887**
**DK-A1- 201 570 324    US-A1- 2019 264 653**

**Description**

The present invention concerns a wind turbine, methods for optimizing the operation of a wind turbine, a controller for controlling an operation of a wind turbine and a computer program. The present invention concerns in particular a method for optimizing the operation of a wind turbine using a turbulence dependent stall line.

Stall is a common problem in the operation of wind turbines. If stall occurs at some portion along the span of the blade, lift decreases while drag and in particular structural loads on the rotor blade increase. In addition, stall results in undesirable noise.

Stall occurs when an angle of attack (AOA, $\alpha$) for a certain airfoil reaches or exceeds a critical AOA for that airfoil. In the field of wind turbine rotor blades, the AOA is the angle between a chord line of a local airfoil at a certain position along the span of the rotor blade and the oncoming flow, i.e., the relative wind.

In pitch-controlled wind turbines, i.e., in wind turbines having a pitch angle of the rotor blades that can be controlled using a pitch drive, it is generally aimed at controlling the pitch angle in such a way that the local AOA at all positions along the span of the blade does not exceed the critical AOA such that the rotor blade does not stall. To that end, it is known to apply a certain safety margin, for instance a fixed value of 5°. The blades are thus controlled that the local AOA is generally at least 5° away from the critical AOA for all positions along the blade.

A conflicting desire is to operate the wind turbine as efficiently as possible, which in other words can be translated as an operation at or in vicinity of the highest possible power coefficient. However, the safety margin which is applied for stall prevention results in non-optimum aerodynamic efficiency of the blade and thus in a reduced lift and power coefficient. Moreover, the stall margin of for instance 5° may not be sufficient to account for strong gusts, in which a sudden increase in wind speed results in a sudden change of AOA that may exceed the AOA safety margin such that the rotor blade stalls despite the provided safety margin.

Document US2019/264653 A1 discloses a prior art example of stall wind turbine control.

In view of these deficiencies known from the prior art, it was an object of the present invention to improve the operation of a wind turbine. In particular, it was an object to provide a method allowing for increased energy yield and thus efficiency of the wind turbine, without increasing the risk of stall. At least, it was an object to provide an alternative to known methods of operating a wind turbine.

The invention provides a method for optimizing the operation of a wind turbine, as well as a wind turbine, a controller for controlling operation of a wind turbine and a computer program as defined in the appended claims.

According to the invention, this task is solved in a first aspect by a method for optimizing the operation of a wind turbine, the method comprising: providing a local angle of attack at one radius position in spanwise direction of a rotor blade of the wind turbine as a function of a pitch angle of the rotor blade and a tip speed ratio of the wind turbine, providing a local stall angle, the local stall angle being an angle of attack indicative of an onset of stall at the one radius position, providing a local stall region as a sub-region of a parameter space spanned by pitch angle and tip speed ratio in which the local angle of attack is equal to or larger than the local stall angle, providing plural local stall regions for a plurality of radius positions along at least a subset of the rotor blade in the spanwise direction, providing a stall region as a union of all provided local stall regions, the stall region comprising all parameter combinations of pitch angle and tip speed ratio for which at least one radius position in the considered subset of the rotor blade stalls, a boundary of the stall region being referred to as a stall line, providing a turbulence dependent stall line, the turbulence dependent stall line shifting the stall line for a positive step in windspeed depending on a turbulence parameter, operating the wind turbine using the turbulence dependent stall line.

In the first steps, a subset of the possible combinations of operation parameters is defined that will lead to local stall onset at the chosen one radius position in spanwise direction. The term parameter space is hereby used to describe a space spanned by two or more than two operating parameters that influence the local angle of attack. For instance, the parameters considered are tip speed ratio and pitch angle. However, in other examples additional operation parameters such as rotor yaw offset from the wind direction can be employed.

The procedure is repeated for a plurality of local positions along the rotor blade in spanwise direction. Thereby, all combinations of operation parameters, which would lead to a local stall at at least one local position along the rotor blade, can be excluded from the parameter space that is used for operating the wind turbine. In case of constant or quasi-static wind conditions, no local stall would occur if operating the wind turbine within the remaining or "allowed" part of the parameter space. However, as discussed above, actual wind conditions are not constant and changes in wind speed such as turbulence or gusts influence the local angle of attack such that further adaptations and considerations regarding the allowable part of the parameter space are necessary.

The stall line is defined as the line segmenting the parameter space into the "stall region" and the remaining region, which may be referred to as "non-stall" region. In case of a two-dimensional parameter space, the stall line allows a simple mathematic evaluation as to whether a combination of operation parameters is within the "stall region" or the "non-stall" region.

For example, the stall line can be expressed as a function of one of the two operating parameters, that will provide a critical or boundary value for the other one of the two operating parameters, respectively. Larger values for the other operating parameters would result in a combination of the operating parameters falling within the "non-stall" region, while smaller values fall within the "stall" region. In other examples, the stall line may be expressed as a function of both operating parameters and be a positive value for combinations in the "non-stall" region or a negative value for combinations in the "stall" region. The actual implementation may readily be chosen by the skilled person as appropriate for the desired application.

The gist of the invention is now based on providing the margin to the stall line in the form of a turbulence dependent stall line, which is obtained by shifting the stall line. In particular, the stall line is shifted to account for a positive step in windspeed. The positive step in windspeed results in an increased tip speed ratio, $\lambda$. The shift may be expressed as $\lambda \rightarrow \lambda + \Delta\lambda$, wherein $\lambda$ is as well known in the the ratio between the tangential speed of the tip of a blade and the actual speed of the wind. The actual shifting amount is determined by a turbulence parameter which can be indicative of the actual turbulence situation at the site of the wind turbine.

Instead of shifting the stall line in the pitch direction as known in the art to obtain a fixed stall margin of a certain number of degrees, the invention realizes that it is more beneficial to consider a margin in another dimension, namely the dimension of wind speed or tip speed ratio, respectively. Thereby, the actual stall margin in degrees depends on the tip speed ratio and will be higher for smaller tip speed ratios.

For instance, the turbulence dependent stall line may result in a 5° stall margin to the stall ridge or stall line for a tip speed ratio of approx. 5, wherein the stall margin may be approx. 10° for a low tip speed ratio of approx. 3 and it may be approx. 3° for a high tip speed ratio of approx. 10. Thereby, the wind turbine can be operated closer to the actual stall line while nevertheless guaranteeing operational safety.

Also the invention is not limited to turbulence dependent stall lines defined as functions of $\lambda - \Theta$, where $\lambda$ is the dimensionless tip speed ratio and $\Theta$ is the pitch angle in degrees, but includes every combination of operation parameters of a wind turbine using a turbulence dependent stall line.

The turbulence dependent stall line enables the controlling of the wind turbine. For example, starting with a present value for the tip speed ratio, other operating parameters like the pitch angle are determined using the turbulence dependent stall line to prevent problems like for example, stall. The wind turbine is then operated with these determined operation parameter values in an optimized state.

According to the invention, it is suggested to consider turbulence induced increased windspeeds when operating a wind turbine to avoid excessive angle of attacks. In specific, when operating a wind turbine, the invention teaches that it is beneficial to consider the angle of attack at a plurality of radius positions along the rotor blade and to operate the wind turbine in a way that no stall occurs at any of these radial positions even if turbulence induced increased windspeeds occur.

According to the invention, the term "operating" includes the control of the wind turbine, like setting pitch angle, rotor speed and azimuth angle, as well as steps of determining or measuring parameter values like for example load, wind speed and vibrations.

According to the invention, the term "spanwise direction" describes the direction from the root of a rotor blade of the wind turbine to the tip of the respective rotor blade.

In a preferred embodiment, the stall line represents a minimum pitch angle as a function of tip speed ratio, and/or the turbulence dependent stall line represents a minimum pitch angle as a function of tip speed ratio.

The wind turbine controller must ensure that the pitch angle set by the wind turbine controller does not fall below the minimum pitch angle. For a pitch angle below the minimum pitch angle, safe operation outside of the stall region would not be possible in case of turbulence. In a preferred embodiment, operating the wind turbine using the turbulence dependent stall line comprises operating the wind turbine with a combination of operating parameters in a parameter space above the turbulence dependent stall line.

The turbulence dependent stall line separates the parameter space into a stall region, in which stall occurs when the wind turbine is operated with operating parameters lying within the stall region and turbulence occurs, and a non-stall region, in which no stall occurs.

In a three- or more dimensional parameter space, the turbulence dependent stall line may be a for example a surface, a sphere or other more dimensional geometry which separates a multi-dimensional stall region from a non-stall region. In particular, it should be emphasized that the entire parameter space may be divided into a stall region and a non-stall region and the turbulence dependent stall line is defined as a function describing the separation of the parameter space into the stall region and the non-stall region, respectively.

The operating parameters include the pitch angle, wherein a pitch angle larger than a critical pitch angle is a safe pitch angle outside the stall region. Likewise, the operation at tip speed ratios higher than a critical tip speed ratios are generally considered safely outside the stall region. Thus, in the present context the term "above" is used to refer to operating parameters that are, relative to the turbulence dependent stall line, in the non-stall region. This further corresponds to the most common case of illustrating pitch angle and tip speed ratio on a diagram, where increasing values of pitch angle may be on a positive vertical axis and increasing values of tip speed ratio on a positive horizontal axis. The non-stall region in such a diagram will likewise be illustrated above the turbulence dependent stall line.

In a preferred embodiment, the method comprises providing a fixed stall region comprising an offset from the stall region, a boundary of the fixed stall region being referred to as fixed stall line.

In an advantageous implementation of the above-described embodiment, the method comprises providing a fixed turbulence dependent stall line, the fixed turbulence dependent stall line shifting the fixed stall line for a positive step in windspeed depending on a turbulence parameter and operating the wind turbine using the fixed turbulence dependent stall line.

Depending on the actual environment at the site of the wind turbine, a combination of fixed stall margin and turbulence dependent stall margin can be used. Thereby, the operation can further be optimized for the local environment, the wind turbine can safely be operated close to the aerodynamic optimum without risking stall. It should be noted that the fixed stall line may also be shifted about a negative amount, i.e., in the negative direction, such that the influence of the turbulence-dependent stall can be further increased.

The fixed stall margin prevents operation in stall for steady wind conditions. Even in steady wind conditions, variation in AOA due to oblique inflow, caused in particular by yaw misalignment or wake effects, and rotor sampling, caused in particular by wind profile and tower shadow, may occur. Thus, the fixed stall margin is preferentially selected to only account for these variations in AOA that nevertheless occur in assumed steady wind conditions.

The turbulence dependent stall margin, in addition, covers the variation in AOA due to a variation in the undisturbed inflow wind speed, i.e., what is generally referred to as turbulence.

By using a combination of fixed and turbulence dependent stall margin the operation can be further optimized. Instead of using a large fixed stall margin, the fixed stall margin can be selected to be as small as necessary to only counteract potential stall for steady wind conditions. In addition, the turbulence dependent stall margin can be particularly designed to cover the turbulence dependent variation in AOA, only. Thus, the overall stall margin can be more "aggressive", i.e., allow an operation closer to stall throughout all operation points of the wind turbine.

In a further advantageous implementation of the implementation above, operating the wind turbine using the fixed turbulence dependent stall line comprises operating the wind turbine in a parameter space above the fixed turbulence dependent stall line.

In this embodiment, the same details as discussed with the turbulence dependent stall line apply also in case an additional fixed margin is added.

In a preferred embodiment, the turbulence parameter is a multiple of a turbulence $\sigma_v$ as in particular prescribed by IEC61400-I with

$$\sigma_v = I_{ref} \, (0.75 \cdot v + 3.75). \qquad \text{(Equation 1)}$$

IEC 61400 is a set of design requirements made to ensure that wind turbines are appropriately engineered against damage from hazards within the planned lifetime. The standard concerns most aspects of the turbine life from site conditions before construction, to turbine components being tested, assembled and operated. The preferred parameters correspond to the model parameters suggested by the IEC for the application of the Normal Turbulence Model as known in the art.

In the formula used above, $\sigma_v$ is the modelled average turbulence intensity, $v$ is a 10 minutes mean wind speed, $I_{ref}$ is the expected value of turbulence intensity at 15 m/s and the model parameters 0.75 an 3.75 are selected in accordance with the IEC standard.

IEC 61400-1 Edition 4 for example teaches the following values for $I_{ref}$ for different turbulence classes:

|       | A+ | 18 % |
|-------|-----|------|
| $I_{ref}$ | A | 16 % |
|       | B | 14 % |
|       | C | 12 % |

Turbulence class A+ comprises high turbulence intensities, while rather minor turbulences are categorized under turbulence class C.

The values for $I_{ref}$ range from 0.12 to 0.18 but may also be set differently by the user.

The present invention in preferred embodiments calculates the average turbulence intensity for a positive step in windspeed using the average turbulence intensity:

$$v \rightarrow v + f \cdot \sigma_v \qquad \text{(Equation 2)}$$

In this case, the parameter $f$ is the turbulence parameter for shifting the stall line as follows. If $\lambda_0$ designates the

original tip speed ratio for the stall line, the turbulence dependent stall line is obtained using the turbulence adjusted windspeed and corresponding adjusted tip speed ratio $\lambda_f$:

$$\lambda_0 = \omega R / v \qquad \text{(Equation 3)}$$

$$\lambda_f = \omega R / (v + 1.28\sigma_v) \qquad \text{(Equation 4)}$$

In a preferred embodiment, the turbulence parameter is a site specific turbulence parameter.

The turbulence parameter may be a parameter determined for a specific site of a wind turbine and for example consider a turbulence class at the wind turbine site. In some examples, the turbulence parameter may be obtained based on measurements such as wind speed measurements at the wind turbine site. In other examples, the turbulence parameter may be obtained based on wind speeds obtained from meteorological data sources.

The turbulence parameter may be constant and set at the time of putting the wind turbine into operation. In other examples it may also be modified. For instance, it may be updated based on measured wind speed data.

In a preferred embodiment, the plural local stall regions are provided for a radially outward subset of the rotor blade in the spanwise direction, wherein an innermost position r of the radially outward subset is in particular at least 0.5r/R, preferentially at least 0.6r/R with r being a local radial position and R being a total length of the rotor blade.

However, the invention is not limited to 0.5r/R or 0.6r/R, but also includes further outward subsets of the rotor blade like for example starting at 0.8r/R. It is beneficial to provide a lower or innermost limit for the determination of the local stall regions because the impact of stall is most critical for the outer part of the blade. In addition, if blade regions in vicinity of the blade root with less efficient or no aerodynamic profiles would be included in the evaluation, resulting in a limited "non-stall" region of the parameter space such that the operation would be less efficient. In other words, it may be acceptable to operate the wind turbine under conditions in which blade sections close to the blade root stall. The quasi-static stall region can accordingly be defined for the outer part of the blade for a predefined fraction of the rotor radius $<f_{Radius}>$: $f_{Radius} <= r/R <= 1$.

It is possible that the resulting length of the considered subset of the rotor blade comprises the complete length in spanwise direction of the rotor blade starting from the set innermost position. In other embodiments, also an outermost position of the subset may be defined.

The distance between the plurality of radius positions can be equal or variable. For instance, the plurality of radius positions can each be 1% or 2% R apart. Also smaller or larger distances between the radius positions are contemplated. A higher number, i.e., a higher density of then provided local stall regions, will result in a higher accuracy of the resulting turbulence dependent stall line, wherein a lower number will allow higher processing efficiency. It is therefore a tradeoff between accuracy and efficiency. In practise, distances between 1% and 2% of the total blade length have shown a most appropriate compromise. Moreover, the distance is not necessarily equidistant. For instance, the distance between two adjacent radius positions may be higher the closer they are to the blade tip. Also the opposite, i.e., smaller distances between adjacent radius positions the closer they are to the blade tip, is contemplated.

In a preferred embodiment, the turbulence dependent stall line is changed during operation.

By changing the turbulence dependent stall line, the operation of the wind turbine may be optimized during operation. For instance, the turbulence dependent stall line can thus be adapted to account for the current actual turbulence and stalling conditions at the site of the wind turbine.

In other examples, the turbulence dependent stall line may be preprogramed and set in advance in the wind turbine controller.

The change of the turbulence dependent stall line preferentially is performed once, at specific intervals, regularly or under specific predetermined conditions for parameter values including wind data, soiling of the rotor blade, yaw misalignment and the like. Further parameters triggering a change of the turbulence dependent stall line are contemplated.

In a preferred embodiment, the turbulence dependent stall line is changed according to a soiling degree of the wind turbine. A soiling degree is indicative of a surface roughness of the rotor blade and may therefore be indicative of the stall characteristic of the rotor blade. For example, the soiling degree may be either "clean" or "soiled". In other examples, the soiling degree may be further differentiated and include "partly soiled". Also further intermediate soiling degrees are feasible.

The soiling degree may in this embodiment be measured, for instance using sensors suitable for determining the soiling degree of the rotor blade including optical sensors. Additionally or alternatively, the soiling degree may be determined based on stored data, for instance user provided, or modelled, for instance based on meteorological data. In general, soiling of rotor blades is known to influence the airflow. In this embodiment, the turbulence dependent stall line is changed according to the determined soiling degree to further optimize the operation of the wind turbine under these conditions.

In a preferred embodiment, the turbulence dependent stall line is changed in accordance with a time of the day.

For instance, it is known that turbulence differs during daytime and nighttime. The changing may be performed periodically on a daily basis, e.g., in the morning and in the evening.

Additionally or alternatively, the turbulence dependent stall line is changed in accordance with a time of the year, meteorological data, modelled turbulence, measured turbulence, wind speed, and/or wind direction.

As mentioned above, it can be beneficial to operate the wind turbine with a different turbulence dependent stall line according to a specific time of the day, for example at night. In the same way, it can be beneficial to operate the wind turbine with different turbulence dependent stall lines for different seasons of the year or meteorological data since actual turbulence differs throughout the year.

In an advantageous implementation of the above-described embodiment, the turbulence dependent stall line is changed according to modelled and/or measured turbulence. Modelled turbulence may include derived turbulence using a wake model for wake effects occurring in a wind park. It also may include other turbulence models based on, for instance, provided meteorological data. The turbulence may also be directly measured or calculated based on load or other measurements, including LIDAR measurements, at or near the wind turbine.

In the example of a wind turbine in a wind park, information on turbulence may be provided by a met mast and the turbulence effect on the particular wind turbine derived, for instance, using wind field propagation. Compared to meteorological data, information provided by a nearby measurement is considered more accurate and of higher confidence. This in particular applies for data measured directly at the wind turbine.

In this embodiment, the available information on actual turbulence In another example, the current turbulence are categorized in confidence levels, based on the acquisition of the information on turbulence. As mentioned, turbulence information based on measurements of local sensors, for example sensors placed on the wind turbine or rotor blades may be part of the highest level of confidence. The second highest level may comprise data provided by a met mast in a wind park installation. The following level in decreasing confidence order, may be meteorological data. The lowest confidence level may comprise historical information, for instance based on meteorological data from the past. Such data provides valuable information on turbulence statistics, however, it provides the lowest accuracy of current turbulence.

In a preferred embodiment, the turbulence dependent stall line is changed in accordance with a yaw misalignment.

It is generally undesired to operate the wind turbine with yaw misalignment. However, in some modes of operation, for instance to deflect the wake away from other turbines in a wind park, it may be desirable to operate the wind turbine with a certain maintained yaw misalignment. Such misalignment of the yaw of the wind turbine results in changed stall characteristics of the rotor blade. Therefore, it is beneficial to change the turbulence dependent stall line to account for these changes in stall characteristics.According to a second aspect of the invention, a computer program is provided comprising computer executable instructions which, when executed on a system, cause the system to perform the method according to any of the preceding embodiments of the first aspect.

According to a third aspect of the invention, a controller for controlling operation of a wind turbine is provided, the controller being configured to execute the computer program according to the second aspect.

According to a fourth aspect of the invention, a wind turbine is provided, comprising the controller according to the third aspect.

The computer program according to the second aspect, the controller according to the third aspect, and the wind turbine according to the fourth aspect may likewise achieve the benefits and advantages as described above in detail with regard to the method according to the first aspect. Moreover, they can likewise be combined with any of the preferred embodiments described above.

Further advantages and preferred embodiments are described in more detail below with reference to the examples in the accompanying figures. Hereby show:

Fig. 1        schematically and as an example a wind turbine;

Fig. 2        schematically and as an example a rotor blade in detail;

Fig. 3        schematically and as an example a flowchart of the method according to an aspect of the invention;

Fig. 4        schematically and as an example a diagram of specific angles of attack for different pitch angles and rotor tip speeds;

Fig. 5        schematically and as an example the diagram of Fig. 4 with a highlighted local stall angle;

Fig. 6        schematically and as an example the diagram of Fig. 5 with a highlighted local stall region;

Fig. 7        schematically and as an example a diagram comprising the local stall angle of Fig. 5 and the local stall region of Fig. 6;

Fig. 8        schematically and as an example the diagram of Fig. 7 with a plurality of local stall angles;

Fig. 9        schematically and as an example the diagram of Fig. 8 with a highlighted stall line and a highlighted stall region;

Fig. 10       schematically and as an example a diagram comprising the stall line and the stall region of Fig. 9 and a turbulence dependent stall line; and

Fig. 11       schematically and as an example a diagram comprising the stall line and the turbulence dependent stall line
              of Fig. 10 and a reference stall line.

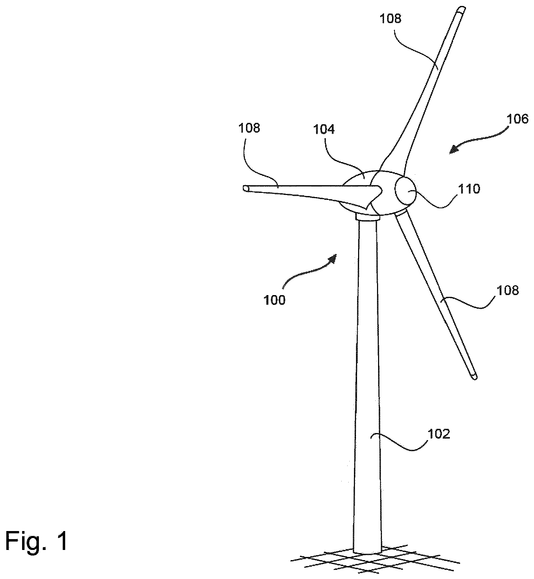

Figure 1 shows a wind power installation 100 comprising a tower 102 and a nacelle 104. A rotor 106 having three rotor blades 108 and a spinner 110 is arranged on the nacelle 104. The rotor 106 is set in rotation motion by the wind during operation and drives a generator in the nacelle 104 as a result. The wind power installation 100 includes a wind turbine controller within.

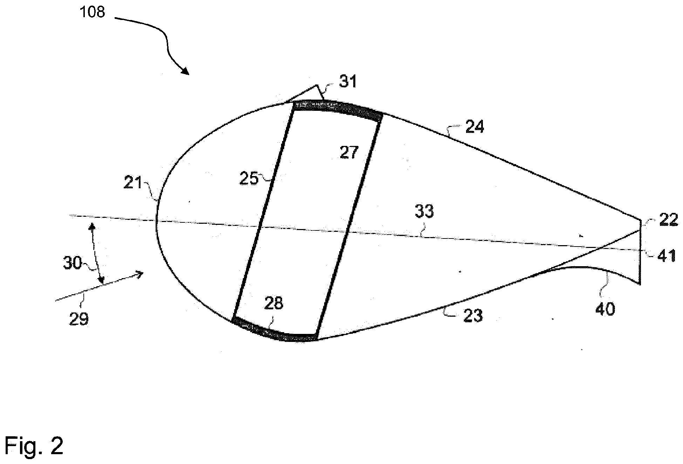

Figure 2 shows one of the rotor blades 108 of Figure 1 in further detail.

Figure 2 shows a leading edge 21 and a trailing edge 22 of the rotor blade 108 as well as a suction side 24 and a pressure side 23. The rotor blade 108 in figure 2 comprises optional features including a gurney flap 40 and vortex generators 31, a shearweb 25 and spar structure 27, 28.

The incoming wind direction 29 spans an angle 30 with a chord line 33, which at chord wise position 0% coincides with the leading edge 21 and at chord wise position 100% with the trailing edge 22. This angle 30 is also known as the angle of attack, AOA.

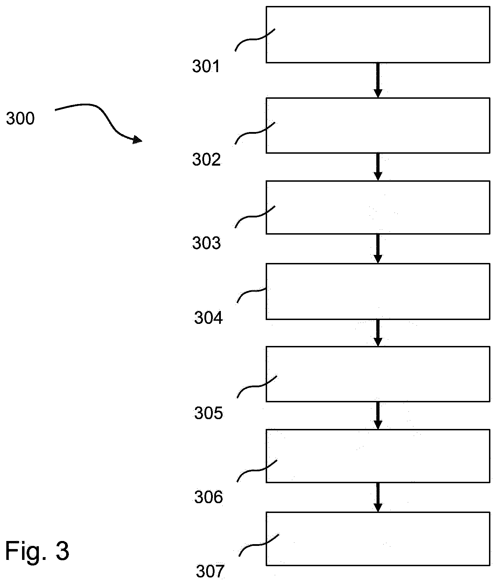

Figure 3 illustrates an example flowchart of a method 300 for optimizing a wind turbine according to the present disclosure.

In a first step 301, a local angle of attack at one radius position in spanwise direction of the rotor blade 106 is provided as a function of pitch angle and tip speed ratio of the wind turbine.

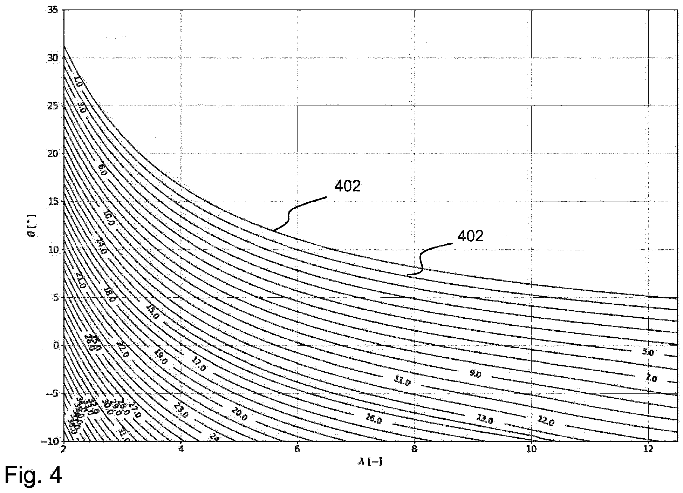

As an example, figure 4 shows a gradient map illustrating different local angles of attack 402 at a particular radius position along the blade. Each of the local angles of attack 402 is obtained for a combination of pitch angle, $\Theta$, illustrated on a vertical axis and tip speed ratio, $\lambda$, illustrated on a horizontal axis. The angles of attack 402 can be represented as a line in the parameter space defined in this example by operating parameters $\Theta$ and $\lambda$. Angles of attack become smaller with higher pitch angle and/or higher tip speed ratio.

Next, method 300 includes a step 302 of providing a local stall angle 201, the local stall angle being an angle of attack indicative of an onset of stall at the one radius position.

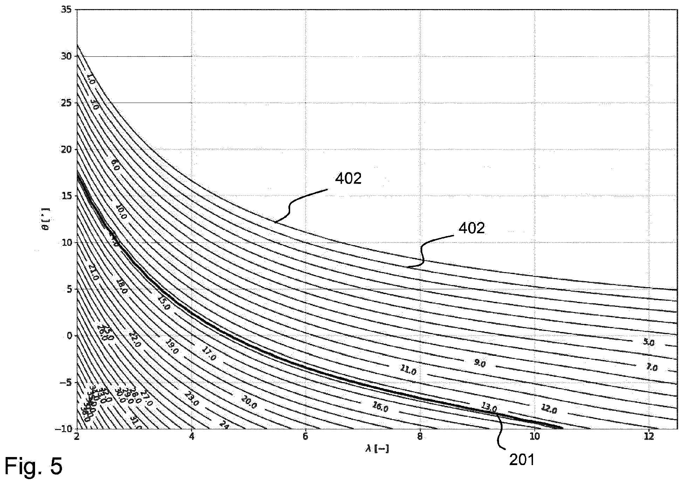

Figure 5 shows the diagram of figure 4 with a highlighted local stall angle 201 at a positive angle of attack of the foil of, in this example, 13.5°. In this example, stall occurs at AoAs greater than 13.5°. It should again be emphasized that the situation investigated may be regarded a quasi-static situation since it does not include changes in wind speed / tip speed ratio that accompany, for instance, gusts or turbulence.

The method 300 further includes a step 303 of providing a local stall region 210 as a sub-region of a parameter space spanned by pitch angle and tip speed ratio in which the local angle of attack is equal to or larger than the local stall angle.

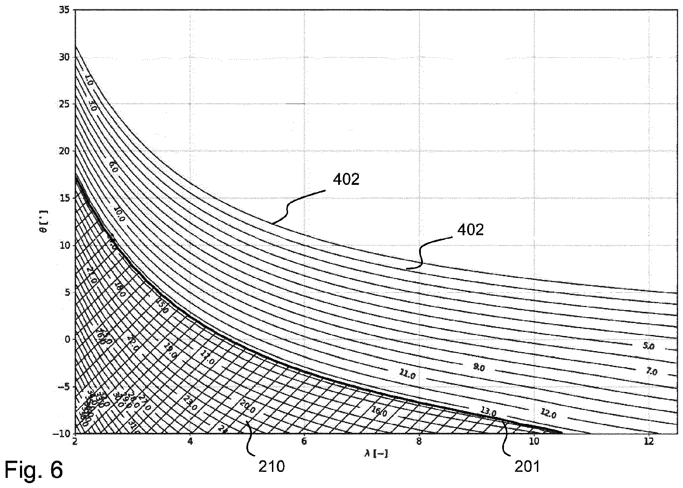

Figure 6 shows the diagram of figure 5 with a highlighted area indicating stall operation for the particular foil with AoA > 13.5°. The highlighted area is an exemplary local stall region 210.

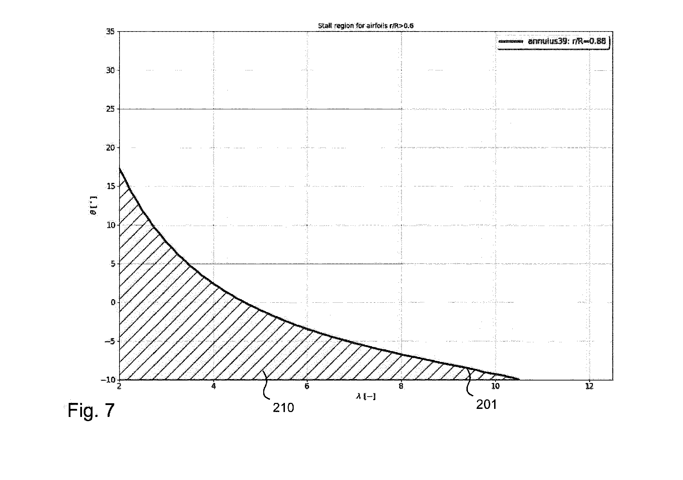

Figure 7 shows the local stall angle 201 and the local stall region 210 of figure 6 without the lines representing the other angles of attack.

The method further includes a step 304 of providing plural local stall regions 210 for a plurality of radius positions along at least a subset of the rotor blade 106 in the spanwise direction.

The quasi-static stall region can be defined for the outer part of the blade for a predefined fraction of the rotor radius $f_{Radius}$: $f_{Radius} \le r/R \le 1$.

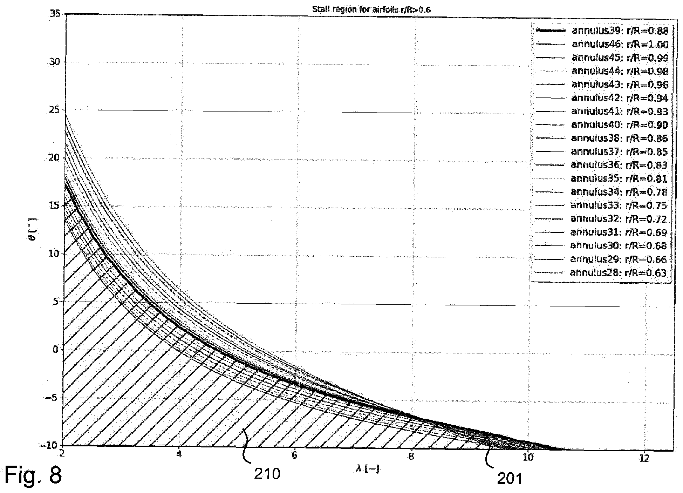

Figure 8 shows a plurality of local stall angles 201 for different airfoils with r/R > 0.6. In this example, $f_{Radius}$ is 0.6, while also other values are contemplated.

The method further includes a step 305 of providing a stall region 211 as a union of all provided local stall regions 210. The stall region 211 comprises all parameter combinations of pitch angle and tip speed ratio for which at least one radius position in the considered subset of the rotor blade in the spanwise direction stalls. A boundary of the stall region 211 being referred to as a stall line 202.

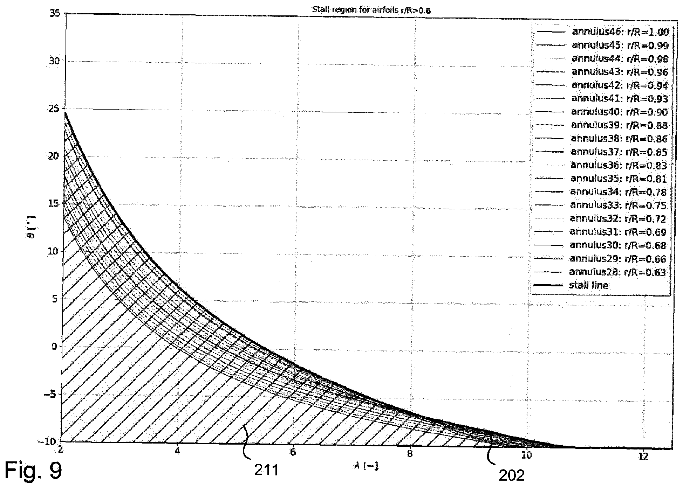

Figure 9 shows the graphs from figure 8 with a stall line 202 and a stall region 211 defined in accordance with step 305.

The maximum of the plurality of local stall angles 201 is defined as stall line 202, indicating the boundary of operation parameter values at which stall occurs.

In order to prevent stall, the wind turbine needs to be operated at operation parameter values above this stall line 202 as illustrated in Figure 9.

The region beneath the stall line 202 is defined as stall region 211 and comprises all operation parameter values at which stall occurs already in the quasi-static example.

However, outside the quasi-static example, this stall line 202 will shift due to an increase or decrease in windspeed. In particular, an increase in windspeed needs to be considered when operating a wind turbine, since stall may occur if the operation parameter values are kept the same.

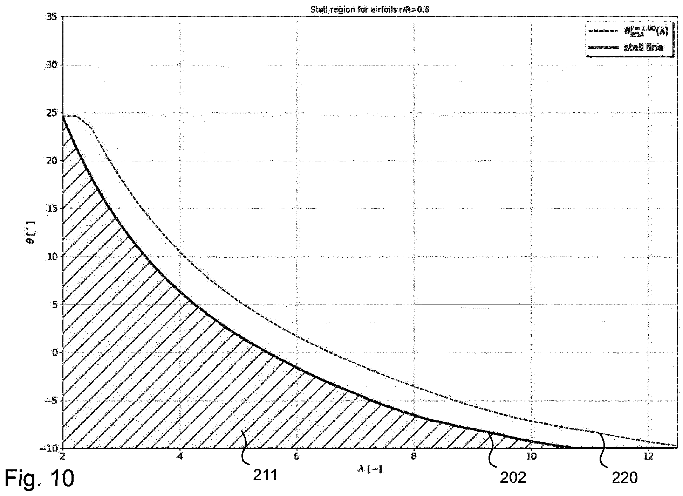

In the event of a positive step in windspeed, that may be induced by turbulences, gusts, and the like, a turbulence dependent stall line 220, shown in figure 10, defines the new boundary of the operation parameter values at which stall occurs. This turbulence dependent stall line is indicated by the dotted line.

The turbulence dependent stall line may also originate from diagrams including parameters other than $\lambda$ and $\Theta$.

Expressed differently, the method 300 includes a step 306 of providing a turbulence dependent stall line 220, the turbulence dependent stall line 220 shifting the stall line 202 for a positive step in windspeed depending on a turbulence parameter. The method thus assumes a sudden change in windspeed without any corresponding change in operating parameter.

For example, the windspeed increases: $v \to v + f * \sigma_v$.

With $\sigma_v$ being the turbulence as prescribed by IEC61400-I: $\sigma_v = I_{ref}(0.75 * v + 3.75)$ and f being the turbulence dependent stall margin applied as a multiplication factor for the turbulence $\sigma_v$. Thus, in this example f is the turbulence parameter according to the present invention.

The sudden change in windspeed, which may also be referred to as a windstep, results in a change in tip speed ratio, more specifically in a decrease in tip speed ratio in accordance with Equation 3 and Equation 4 as described above. Thus, instead of on or above stall line 202, the operation parameters of the wind turbine 100 will be within the stall region 211.

If the stall line 202 is defined to obtain $\Theta$ as a function of $\lambda_0$, the turbulence dependent stall line 220 obtains $\Theta$ as a function of $\lambda_f$.

With a windstep approach, the following expected fractions of time outside the stall region may be calculated depending on the turbulence parameter f:

| f | exp fraction outside stall |
|------|------|
| 0.00 | 0.50 |
| 0.75 | 0.77 |
| 1.00 | 0.84 |
| 1.28 | 0.90 |
| 2.00 | 0.98 |

In one example, a turbulence dependent stall margin is applied to the turbulence dependent stall line only in case the turbulence parameter f is larger than 0.

The windstep approach is rather conservative. A more natural growing gust, dynamic inflow and rotor acceleration tend to keep the operation out of stall. Thus, in an improved embodiment of the present invention, a combination of a fixed stall, i.e., a fixed number of degrees in pitch as a margin from the critical angle of attack, and the turbulence dependent stall may be considered.

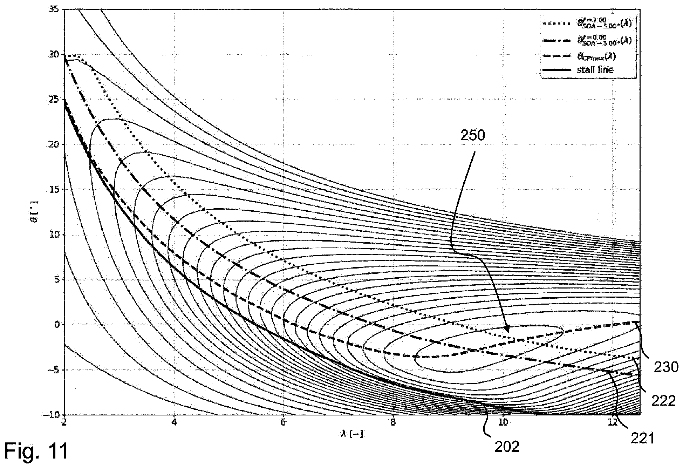

In another embodiment, the function to obtain $\Theta$ may thus further include an additional additive term adding a further margin on the pitch angle. This example is illustrated in figure 11 as fixed margin stall line 221. In fixed margin stall line 221, there is a fixed margin of 5° and a turbulence parameter f=0 as can be appreciated from the mere vertical shifting of the quasi-static stall line 202 5° upwards on the vertical axis. The turbulence dependent stall line 222 further includes the turbulence-dependent margin with a turbulence parameter f=1 in addition to the fixed stall margin of, in this example, 5°. Turbulence dependent stall line 222 therefore includes a combination of a) a fixed stall margin and b) a turbulence dependent stall margin, whereas turbulence dependent stall line 220 only includes the turbulence dependent stall margin.

The turbulence dependent stall line 222 and the further stall line 221 are not parallel but have different shape.

Finally, method 300 comprises a step 307 of operating the wind turbine 100 using the turbulence dependent stall line 220 as appreciable from figure 10 or the turbulence dependent stall line 222 as appreciable from figure 11.

Figure 11 shows additionally a power gradient map. Additionally, a maximum power curve 230, dashed line, of the gradient map of the power coefficient is shown, indicating the optimal operation parameter values.

The centre of the gradient map indicates the optimal operation parameters regarding power production.

In order to optimize the operation of the wind turbine, it is desirable to operate the wind turbine with parameter values close to maximum power curve 230 whenever possible. For tip speed ratios lower than a crossing point 250, the maximum power curve 230 lies below the turbulence dependent stall line 222. Thus, operating the wind turbine at the operation conditions corresponding to the maximum power curve 230 would be within the stall region in case of turbulence.

In this case, the wind turbine 100 will follow the maximum power curve 230 for tip speed ratios exceeding the crossing point 250, and it will follow the turbulence dependent stall line 220 for lower tip speed ratios. In other operation modes, for instance, in reduced power production or reduced noise operation, the wind turbine 100 may deviate from the turbulence dependent stall line 220 or 222. In any case, however, the turbulence dependent stall line 220 or 222 defines a minimum pitch angle which should be guaranteed by the wind turbine controller.

$$\Theta_{min}(\lambda) = \max\left(\Theta^{f=fSigma}_{SOA-angleStallMargin}(\lambda), \Theta_{CPmax}(\lambda)\right) \qquad \text{(Equation 5)}$$

In other words, the pitch controller should maintain the pitch angle to be equal to or higher than both of the turbulence dependent stall line 220 or 222 (depending on whether an additional fixed stall margin is set) and the maximum power curve 230 for each tip speed ratio $\lambda$.

## Claims

1. A method for optimizing the operation of a wind turbine (100), the method comprising:

    - providing a **local angle of attack** at one radius position in spanwise direction of a rotor blade of the wind turbine as a function of a pitch angle of the rotor blade and a tip speed ratio of the wind turbine,
    - providing a **local stall angle** (201), the local stall angle (201) being an angle of attack indicative of an onset of stall at the one radius position,
    - providing a **local stall region** (210) as a sub-region of a parameter space spanned by pitch angle and tip speed ratio in which the local angle of attack is equal to or larger than the local stall angle,
    - providing **plural local stall regions** (210) for a plurality of radius positions along at least a subset of the rotor blade in the spanwise direction,
    - providing a **stall region** (211) as a union of all provided local stall regions (210), the stall region (211) comprising all parameter combinations of pitch angle and tip speed ratio for which at least one radius position in the considered subset of the rotor blade stalls, a boundary of the stall region (211) being referred to as a **stall line** (202),
    - providing a **turbulence dependent stall line** (220, 222), the turbulence dependent stall line (220, 222) shifting the stall line (202) for a positive step in windspeed depending on a turbulence parameter,
    - **operating** the wind turbine (100) using the turbulence dependent stall line (220, 222).

2. The method according to claim 1, wherein

    the stall line (202) represents a minimum pitch angle as a function of tip speed ratio, and/or
    the turbulence dependent stall line (220, 222) represents a pitch angle as a function of tip speed ratio.

3. The method according to any of the proceeding claims, wherein:

    operating the wind turbine (100) using the turbulence dependent stall line (220, 222) comprises
    operating the wind turbine (100) with a combination of operating parameters in a parameter space above the turbulence dependent stall line (220, 222).

4. The method according to any of the proceeding claims, comprising:
    providing a **fixed stall region** comprising an offset from the stall region (211), a boundary of the fixed stall region being referred to as **fixed stall line** (221).

5. The method according to claim 4, comprising:

    providing a **fixed turbulence dependent stall line** (222), the fixed turbulence dependent stall line (222) shifting the fixed stall line (221) for a positive step in windspeed depending on a turbulence parameter,

operating the wind turbine (100) using the fixed turbulence dependent stall line (222) as the turbulence dependent stall line (220, 222).

6. The method according to claim 5, wherein

   operating the wind turbine (100) using the fixed turbulence dependent stall line (222) comprises
   operating the wind turbine (100) in a parameter space above the fixed turbulence dependent stall line (222).

7. The method according to any of the preceding claims, wherein
   the turbulence parameter is a multiple of a turbulence $\sigma_v$ as prescribed by IEC61400-I with $\sigma_v = I_{ref}(0.75 \cdot v + 3.75)$.

8. The method according to any of the preceding claims, wherein
   the turbulence parameter is a site specific turbulence parameter.

9. The method according to any of the preceding claims, wherein
   the **plural local stall regions** (210) are provided for an radially outward subset of the rotor blade (108) in the spanwise direction, wherein an innermost position r of the radially outward subset is in particular at least 0.5$r/R$, preferentially at least 0.6$r/R$ with $r$ being a local radial position and $R$ being a total length of the rotor blade (108).

10. The method according to any of the preceding claims, wherein
    the turbulence dependent stall line (220, 222) is changed during operation.

11. The method according to claim 10, wherein the turbulence dependent stall line (220, 222) is changed in accordance with at least one of:

    - a time of the day;
    - a time of the year;
    - meteorological data;
    - modelled turbulence;
    - measured turbulence;
    - wind information including wind speed and/or wind direction;
    - a soiling degree of the rotor blade; and a yaw misalignment.

12. A computer program comprising computer executable instructions which, when executed on a system, cause the system to perform the method according to any of the preceding claims.

13. A controller for controlling operation of a wind turbine (100), the controller being configured to execute the computer program of claim 12.

14. A wind turbine (100) comprising the controller according to preceding claim 13.


**Patentansprüche**

1. Verfahren zum Optimieren des Betriebs einer Windenergieanlage (100), wobei das Verfahren umfasst:

   - Bereitstellen eines **lokalen Anstellwinkels** an einer Radiusposition in Spannweitenrichtung eines Rotorblatts der Windenergieanlage als Funktion eines Einstellwinkels des Rotorblatts und einer Schnelllaufzahl der Windenergieanlage,
   - Bereitstellen eines **lokalen** Strömungs**abrisswinkels** (201), wobei der lokale Strömungsabrisswinkel (201) ein Anstellwinkel ist, der ein Einsetzen eines Strömungsabrisses an der einen Radiusposition angibt,
   - Bereitstellen eines **lokalen** Strömungs**abrissbereichs** (210) als Teilbereich eines Parameterraums, der durch den Einstellwinkel und die Schnelllaufzahl aufgespannt wird, wobei der lokale Anstellwinkel gleich oder größer als der lokale Strömungsabrisswinkel ist,
   - Bereitstellen **mehrerer lokaler** Strömungs**abrissbereiche** (210) für mehrere Radiuspositionen entlang mindestens eines Teilbereichs des Rotorblatts in Spannweitenrichtung,
   - Bereitstellen eines Strömungs**abrissbereichs** (211) als Vereinigung aller bereitgestellten lokalen Strömungsabrissbereiche (210), wobei der Strömungsabrissbereich (211) alle Parameterkombinationen des Einstellwinkels und der Schnelllaufzahl umfasst, für die an mindestens einer Radiusposition in dem betrachteten Teilbereich des Rotorblatts Strömungsabriss auftritt, wobei eine Grenze des Strömungsabrissbereichs (211) als Strömung**sabrisslinie** (202) bezeichnet wird,

- Bereitstellen einer **turbulenzabhängigen** Strömungs**abrisslinie** (220, 222), wobei die turbulenzabhängige Strömungsabrisslinie (220, 222) die Strömungsabrisslinie (202) für einen positiven Schritt der Windgeschwindigkeit abhängig von einem Turbulenzparameter verschiebt,

- **Betreiben der Windenergieanlage (100) unter Verwendung der turbulenzabhängigen Strömungsabrisslinie (220, 222).**

2. Verfahren nach Anspruch 1, wobei

die Strömungsabrisslinie (202) einen minimalen Einstellwinkel als Funktion der Schnelllaufzahl darstellt, und/oder

die turbulenzabhängige Strömungsabrisslinie (220, 222) einen Einstellwinkel als Funktion der Schnelllaufzahl darstellt.

3. Verfahren nach einem der vorhergehenden Ansprüche, wobei:

Betreiben der Windenergieanlage (100) unter Verwendung der turbulenzabhängigen Strömungsabrisslinie (220, 222) umfasst

Betreiben der Windenergieanlage (100) mit einer Kombination von Betriebsparametern in einem Parameterraum über der turbulenzabhängigen Strömungsabrisslinie (220, 222).

4. Verfahren nach einem der vorhergehenden Ansprüche, umfassend:
Bereitstellen eines **festen** Strömungs**abrissbereichs**, der einen Versatz von dem Strömungsabrissbereich (211) umfasst, wobei eine Grenze des festen Strömungsabrissbereichs als **feste** Strömungs**abrisslinie** (221) bezeichnet wird.

5. Verfahren nach Anspruch 4, umfassend:

Bereitstellen einer **festen turbulenzabhängigen** Strömungs**abrisslinie** (222), wobei die feste turbulenzabhängige Strömungsabrisslinie (222) die feste Strömungsabrisslinie (221) für einen positiven Schritt der Windgeschwindigkeit abhängig von einem Turbulenzparameter verschiebt,

Betreiben der Windenergieanlage (100) unter Verwendung der festen turbulenzabhängigen Strömungsabrisslinie (222) als die turbulenzabhängige Strömungsabrisslinie (220, 222).

6. Verfahren nach Anspruch 5, wobei

Betreiben der Windenergieanlage (100) unter Verwendung der festen turbulenzabhängigen Strömungsabrisslinie (222) umfasst

Betreiben der Windenergieanlage (100) in einem Parameterraum über der festen turbulenzabhängigen Strömungsabrisslinie (222).

7. Verfahren nach einem der vorhergehenden Ansprüche, wobei
der Turbulenzparameter ein Vielfaches einer Turbulenz $\sigma v$ ist, wie durch IEC61400-I mit $\sigma v = Iref\ (0{,}75 \cdot v + 3{,}75)$ vorgeschrieben.

8. Verfahren nach einem der vorhergehenden Ansprüche, wobei
der Turbulenzparameter ein ortsspezifischer Turbulenzparameter ist.

9. Verfahren nach einem der vorhergehenden Ansprüche, wobei
die **mehreren lokalen** Strömungs**abrissbereiche** (210) für einen radial äußeren Teilbereich des Rotorblatts (108) in Spannweitenrichtung bereitgestellt werden, wobei eine innerste Position r des radial äußeren Teilbereichs insbesondere mindestens 0,5 *r/R,* vorzugsweise mindestens 0,6 *r/R* beträgt, wobei r eine lokale radiale Position ist und R eine Gesamtlänge des Rotorblatts (108) ist.

10. Verfahren nach einem der vorhergehenden Ansprüche, wobei
die turbulenzabhängige Strömungsabrisslinie (220, 222) während des Betriebs geändert wird.

11. Verfahren nach Anspruch 10, wobei die turbulenzabhängige Strömungsabrisslinie (220, 222) gemäß mindestens einem der Folgenden geändert wird:

- einer Tageszeit;
- einer Jahreszeit;
- meteorologischen Daten;
- modellierter Turbulenz;
- gemessener Turbulenz;
- Windinformationen einschließlich Windgeschwindigkeit und/oder Windrichtung;
- einem Verschmutzungsgrad des Rotorblatts; und einer Gierfehlausrichtung.

12. Computerprogramm, umfassend computerausführbare Anweisungen, die, wenn sie auf einem System ausgeführt werden, bewirken, dass das System das Verfahren nach einem der vorhergehenden Ansprüche durchführt.

13. Steuerung zum Steuern des Betriebs einer Windenergieanlage (100), wobei die Steuerung ausgestaltet ist, das Computerprogramm nach Anspruch 12 auszuführen.

14. Windenergieanlage (100), umfassend die Steuerung nach dem vorhergehenden Anspruch 13.

**Revendications**

1. Procédé d'optimisation du fonctionnement d'une éolienne (100), le procédé comprenant :

- la fourniture d'un **angle d'attaque local** à une position radiale dans une direction d'envergure d'une pale de rotor de l'éolienne, en fonction d'un angle de tangage de la pale de rotor et d'un rapport de vitesse de rotation de l'éolienne,
- la fourniture d'un **angle de décrochage local** (201), l'angle de décrochage local (201) étant un angle d'attaque indiquant un début de décrochage au niveau de ladite position radiale,
- la fourniture d'une **région de décrochage locale** (210) en tant que sous-région d'un espace de paramètres couvert par l'angle de tangage et le rapport de vitesse de rotation dans laquelle l'angle d'attaque local est égal ou supérieur à l'angle de décrochage local,
- la fourniture de **plusieurs régions de décrochage locales** (210) pour une pluralité de positions radiales le long d'au moins un sous-ensemble de la pale de rotor dans la direction d'envergure,
- la fourniture d'une **région de décrochage** (211) en tant qu'union de toutes les régions de décrochage locales (210) fournies, la région de décrochage (211) comprenant toutes les combinaisons de paramètres d'angle de décrochage et de rapport de vitesse de rotation pour lesquelles au moins une position radiale décroche dans le sous-ensemble considéré de la pale de rotor, une limite de la région de décrochage (211) étant appelée **ligne de décrochage** (202),
- la fourniture d'une **ligne de décrochage dépendante de la turbulence** (220, 222), la ligne de décrochage dépendante de la turbulence (220, 222) décalant la ligne de décrochage (202) pour une évolution positive de vitesse du vent dépendant d'un paramètre de turbulence,
- **l'actionnement** de l'éolienne (100) à l'aide de la ligne de décrochage dépendante de la turbulence (220, 222).

2. Procédé selon la revendication 1, dans lequel

la ligne de décrochage (202) représente un angle de tangage minimal en fonction du rapport de vitesse de rotation, et/ou
la ligne de décrochage dépendante de la turbulence (220, 222) représente un angle de tangage en fonction du rapport de vitesse de rotation.

3. Procédé selon l'une quelconque des revendications précédentes, dans lequel :

l'actionnement de l'éolienne (100) en utilisant la ligne de décrochage dépendante de la turbulence (220, 222) comprend
l'actionnement de l'éolienne (100) avec une combinaison de paramètres d'actionnement dans un espace de paramètres au-dessus de la ligne de décrochage dépendante de la turbulence (220, 222).

**4.** Procédé selon l'une quelconque des revendications précédentes, comprenant :
la fourniture d'une **région de décrochage fixe** comprenant un décalage par rapport à la région de décrochage (211), une limite de la région de décrochage fixe étant appelée **ligne de décrochage fixe** (221).

**5.** Procédé selon la revendication 4, comprenant :

la fourniture d'une **ligne de décrochage fixe dépendante de la turbulence** (222), la ligne de décrochage fixe dépendante de la turbulence (222) décalant la ligne de décrochage fixe (221) pour une évolution positive de vitesse du vent dépendant d'un paramètre de turbulence,
l'actionnement de l'éolienne (100) en utilisant la ligne de décrochage fixe dépendante de la turbulence (222) comme ligne de décrochage dépendante de la turbulence (220, 222).

**6.** Procédé selon la revendication 5, dans lequel

l'actionnement de l'éolienne (100) en utilisant la ligne de décrochage fixe dépendante de la turbulence (222) comprend
l'actionnement de l'éolienne (100) dans un espace de paramètres au-dessus de la ligne de décrochage fixe dépendante de la turbulence (222).

**7.** Procédé selon l'une quelconque des revendications précédentes, dans lequel
le paramètre de turbulence est un multiple d'une turbulence $\sigma_v$ comme prescrit par la norme IEC61400-I, avec $\sigma_v = I_{ref}$ (0,75·$v$+3,75).

**8.** Procédé selon l'une quelconque des revendications précédentes, dans lequel
le paramètre de turbulence est un paramètre de turbulence spécifique au site.

**9.** Procédé selon l'une quelconque des revendications précédentes, dans lequel
les **plusieurs régions de décrochage locales** (210) sont prévues pour un sous-ensemble radialement vers l'extérieur de la pale de rotor (108) dans la direction d'envergure, dans lequel une position la plus intérieure $r$ du sous-ensemble radialement vers l'extérieur est en particulier d'au moins 0,5$r$/R, de préférence d'au moins *0,6r/R, r* étant une position radiale locale et R étant la longueur totale de la pale de rotor (108).

**10.** Procédé selon l'une quelconque des revendications précédentes, dans lequel
la ligne de décrochage dépendante de la turbulence (220, 222) est modifiée pendant un fonctionnement.

**11.** Procédé selon la revendication 10, dans lequel la ligne de décrochage dépendante de la turbulence (220, 222) est modifiée en fonction d'au moins l'un des éléments suivants :

- une heure de la journée ;
- une période de l'année ;
- des données météorologiques ;
- une turbulence modélisée ;
- une turbulence mesurée ;
- des informations sur le vent, y compris la vitesse du vent et/ou la direction du vent ;
- un degré de salissure de la pale de rotor ; et un désalignement de lacet.

**12.** Programme informatique comprenant des instructions exécutables par ordinateur qui, lorsqu'elles sont exécutées sur un système, amènent le système à effectuer le procédé selon l'une quelconque des revendications précédentes.

**13.** Dispositif de commande pour commander le fonctionnement d'une éolienne (100), le dispositif de commande étant configuré pour exécuter le programme informatique selon la revendication 12.

**14.** Éolienne (100) comprenant le dispositif de commande selon la revendication 13 précédente.

Fig. 1

Fig. 2

300

301

302

303

304

305

306

307

Fig. 3

Fig. 4

Fig. 5

Fig. 6

Fig. 7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019264653 A1